# EUROPEAN PATENT SPECIFICATION

(11) **EP 4 276 339 B1**
(45) Date of publication and mention of the grant of the patent: **27.11.2024**
(21) Application number: 23171612.7
(22) Date of filing: 04.05.2023
(51) Int. Cl.: F16L 21/06, F16L 39/00

(54) **PIPE CONNECTING SYSTEM**
ROHRVERBINDUNGSSYSTEM
SYSTÈME DE RACCORDEMENT DE TUYAUX

(30) Priority: 09.05.2022 IT 202200009467
(43) Date of publication of application: 15.11.2023
(73) Proprietor: DENSO THERMAL SYSTEMS S.p.A., 10046 Poirino (Torino) (IT)
(72) Inventor: BORGHI, Antonello, I-10046 POIRINO (Torino) (IT); DESOGUS, Alessandro, I-10046 POIRINO (Torino) (IT)
(74) Representative: Vanzini, Christian

(56) References cited:
- EP-A2- 1 726 862
- US-A1- 2005 046 184
- US-A1- 2008 264 605
- US-A1- 2009 066 079

## Description

The present invention relates to a pipe connecting system, particularly for automotive air conditioning systems.

In particular, the present invention relates to a pipe connecting system comprising:
a first pipe and a second pipe each comprising a flared end;
a connecting block having a first side intended to receive the first pipe and the second pipe, and a second side opposite the first side and intended to receive a third pipe and a fourth pipe, wherein the connecting block comprises a first block part and a second block part made of plastics material and configured to be fastened to each other around the flared ends of the first pipe and second pipe.

A pipe connecting system is described, for example, in US 5556138 A. Such a known system is not suitable where the first pipe and the second pipe are provided with flanges.

US 2009/066079 A1 discloses a pipe connecting system according to the preamble of claim 1. A further pipe connecting system is disclosed in EP 1726862 A2.

An object of the present invention is to provide a pipe connecting system of the type described above but which is suitable for the case where the first pipe and the second pipe are provided with flanges.

A pipe connecting system according to claim 1 forms the subject of the invention. In such a pipe connecting system,
one of said first block part and second block part comprises a plurality of hook-shaped lateral retaining portions configured to engage respective lateral edges of the other of said first block part and second block part in such a way as to fasten the first block part and the second block part to each other;
the first pipe and the second pipe each comprise a flanged portion arranged close to the relevant flared end;
the pipe connecting system further comprises a locking plate made of metal material, which comprises an engaging portion configured to engage simultaneously the flanged portions of the first pipe and second pipe, the locking plate being fixable to the connecting block by at least one screw to hold the first pipe and the second pipe between the connecting block and the locking plate.

According to one embodiment, at the second side of the connecting block, one of said first block part and second block part comprises a front portion covering a corresponding front surface of the other of said first block part and second block part.

At least one threaded insert may be inserted in said front portion for fastening said third pipe and fourth pipe to the connecting block by a relevant screw.

The third and fourth pipes are in particular inserted into respective inner enlarged diameter portions of the first pipe and second pipe, respectively. The third pipe and fourth pipe may be provided with at least one support portion laterally extending and carrying a through-hole adapted to receive a relevant screw for coupling to said at least one threaded insert.

The solution according to the invention makes it possible to connect pipes in a direct manner, i.e. without using a third element to achieve fluid continuity, and to make a pipe restraint that allows the first and second pipes (which specifically may be exchanger-side pipes) to be supported and fixed with respect to the motor vehicle, as well as connected to the third and fourth pipes (which specifically may be motor vehicle-side pipes). All this is essentially by means of a connecting block made of plastics material and a locking plate coupled to the connecting block.

Further features and advantages of the pipe connecting system according to the invention will become clearer from the following detailed description of an embodiment of the invention, made with reference to the accompanying drawings, provided purely for illustrative and non-limiting purposes, wherein
Fig. 1 is a perspective view of a heat exchanger provided with the pipe connecting system according to the invention;
Fig. 2 and 3 are enlarged scale views of the detail of the pipe connecting system;
Fig. 4 is an exploded view of the pipe connecting system;
Fig. 5 is a sectional view of the pipe connecting system;
Fig. 6 is an exploded view of the pipe connecting system with only the exchanger-side pipes;
Fig. 7 and 8 show assembly steps of the pipe connecting system; and
Fig. 9 and 10 are further perspective views that show the components of the pipe connecting system.

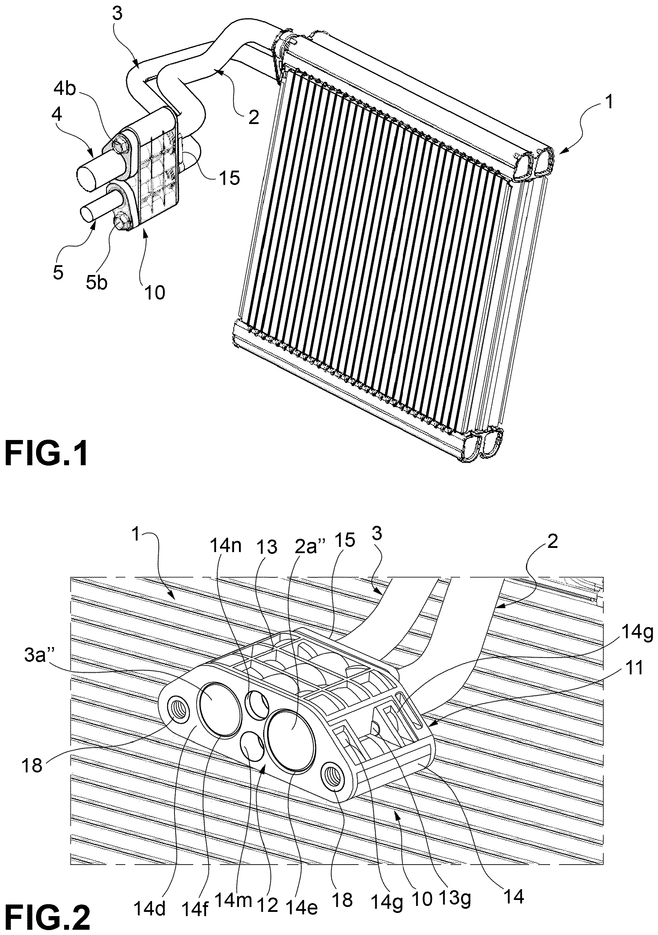

Fig. 1 shows a heat exchanger of an air conditioning unit, such as an evaporator, collectively denoted by 1. The heat exchanger 1 is connected via a pair of pipes 2 and 3 made of metal material (one inlet into the heat exchanger and one outlet out of the heat exchanger) to a circuit for circulating a refrigerant fluid installed in a motor vehicle (not shown).

More specifically, the pipes 2 and 3, which in the following will be designated as the first and second pipe, respectively, are connected to a connecting block 10. Fig. 1 also shows a third pipe and a fourth pipe made of metal material, indicated by 4 and 5, respectively, which are also connected to the connecting block 10 and belong to the refrigerant fluid circuit to which the heat exchanger 1 is connected. Therefore, a first side 11 intended to receive the first pipe and the second pipe 2, 3, and a second side 12 opposite the first side 11 and intended to receive the third pipe and the fourth pipe 4, 5 may be identified in the connecting block 10.

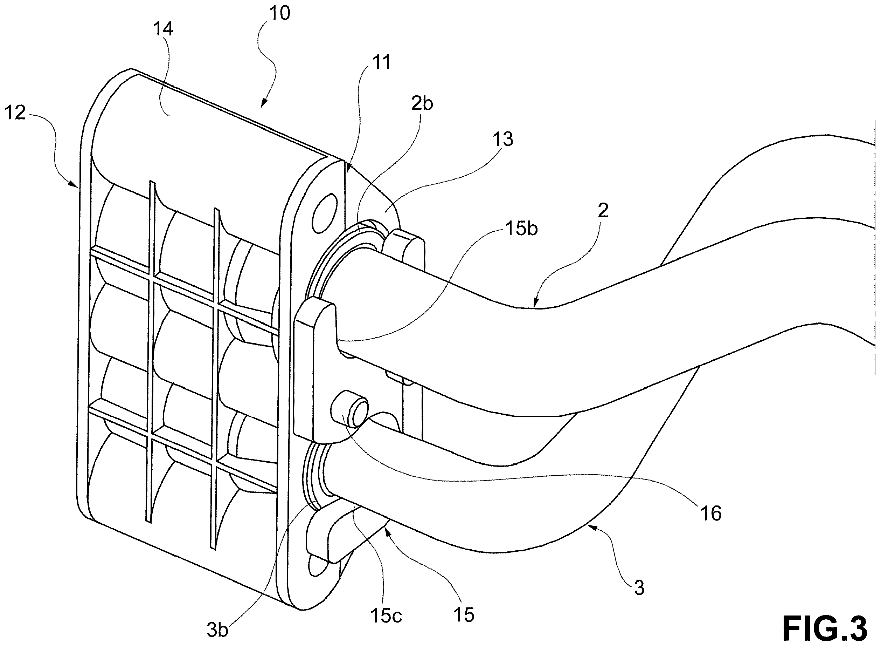

Fig. 2 to 10 show in greater detail the pipe connecting system formed of the connecting block 10 and of the pipes connected thereto.

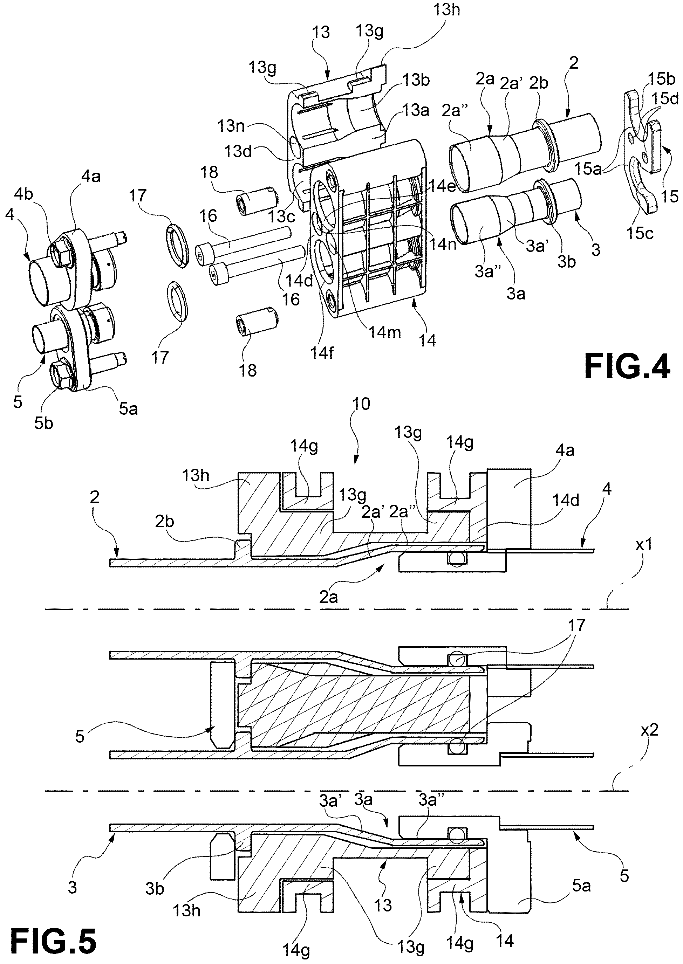

As may be seen in Fig. 4-6, the first pipe and the second pipe 2, 3 each comprise a flared end 2a, 3a. Each flared end 2a, 3a comprises a flare 2a', 3a' and, distal to the flare 2a', 3a', an enlarged diameter portion 2a", 3a". Each enlarged diameter portion 2a", 3a" has a larger diameter than the remaining part of the relevant pipe, and is connected to that remaining part by the relevant flare 2a', 3a'. In the present description, the terms "distal" and "proximal" mean "farther" and "closer", respectively, in relation to the entity with which the first pipe and the second pipe are associated, which in the example shown consists of the heat exchanger 1.

Moreover, the first pipe and the second pipe 2, 3 each comprise a flanged portion 2b, 3b extending radially outward and arranged close to the relevant flared end 2a, 3a, in a proximal position with respect thereto. The flared portion and flanged portion are obtained on the pipes by conventional pipe machining techniques.

Referring specifically to Fig. 4 and 6-10, the connecting block 10 comprises a first block part 13 and a second block part 14 both made of plastics material. These block parts 13, 14 are configured to be fastened to each other around the flared ends 2a, 3a of the first and the second pipe 2, 3. More precisely, when the first block part 13 and the second block part 14 are fastened to each other by closing the connecting block 10 around the first pipe and the second pipe 2, 3, they enclose not only the respective flared portions 2a, 3a, but also a segment of pipe comprised between the flared portions 2a, 3a and the respective flanged portions 2b, 3b. In the example shown, when the connecting block 10 is closed, the first block part 13 and the second block part 14 also enclose the flanged portions 2b, 3b.

The first block part 13 has a contact surface 13a that, when the connecting block 10 is closed, comes into contact with a corresponding contact surface 14a of the second block part 14.

In the contact surface 13a of the first block part 13, a pair of parallel-extending grooves 13b, 13c is obtained between the first side 11 and the second side 12 of the connecting block 10. These grooves 13b, 13c have a semicircular cross-section, and are intended to receive the first pipe and the second pipe 2, 3, respectively. Each of these grooves comprises, in the direction that runs from the first side 11 to the second side 12 of the connecting block 10, a stepped segment intended to receive the relevant flanged pipe portion 2b or 3b, a smaller diameter segment intended to receive the relevant pipe portion between the flanged portion and the flared portion, a flared segment intended to receive the relevant flare 2a' or 3a', and an enlarged diameter segment intended to receive the relevant enlarged diameter pipe portion 2a" or 3a". In Fig. 5, x1 and x2 denote the axes of the first pipe 2 and the second pipe 3, respectively.

In the contact surface 14a of the second block part 14, a pair of parallel-extending grooves 14b, 14c is obtained between the first side 11 and the second side 12 of the connecting block 10. These grooves 14b, 14c have a semicircular cross-section along almost their entire extension, and, when the first block part 13 and the second block part 14 are fixed together by closing the connecting block 10, they are intended to form, together with the grooves 13b, 13c of the first block part 13, the holes or seats in which the first pipe and the second pipe 2, 3 are accommodated, respectively. Each of the grooves 14b, 14c of the second block portion 14 comprises, in the direction that runs from the first side 11 to the second side 12 of the connecting block 10, a stepped segment intended to receive the relevant flanged pipe portion 2b or 3b, a smaller diameter segment intended to receive the relevant pipe portion between the flanged portion and the flared portion, a flared segment intended to receive the relevant flare 2a' or 3a', and an enlarged diameter segment intended to receive the relevant enlarged diameter pipe portion 2a" or 3a".

On the second side 12 of the connecting block 10, the second block part 14 comprises a front portion 14d that, when the first block part 13 and the second block part 14 are fixed together, covers a corresponding front surface 13d of the first block part 13. A pair of holes 14e, 14f, which are a continuation of the grooves 14b, 14c and are intended to receive the rim end of the enlarged diameter pipe portions 2a", 3a", is obtained on this front portion 14d.

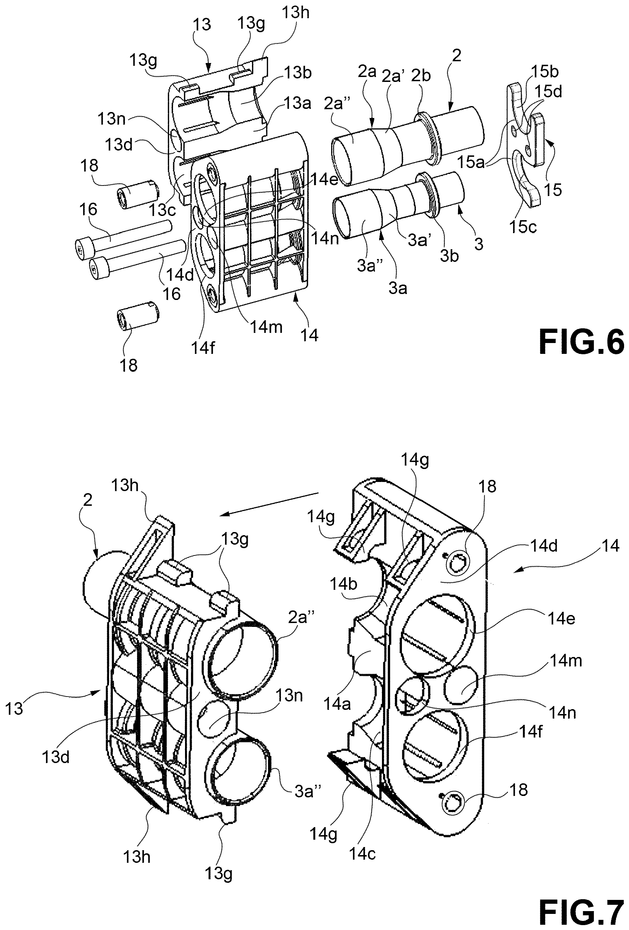

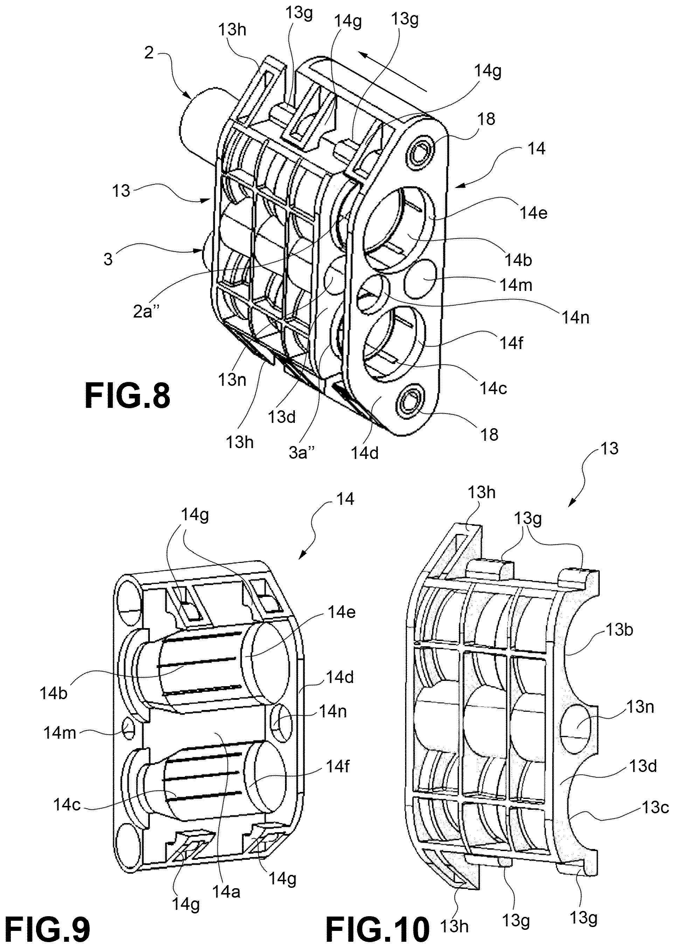

The second block part 14 further comprises a plurality of hook-shaped lateral retaining portions 14g, arranged on opposite lateral sides of the contact surface 14a. These lateral retaining portions 14g are configured to engage respective lateral edge portions 13g of the first block part 13 in such a way as to fasten the first block part 13 and the second block part 14 to each other. In practice, the coupling of these parts is achieved through a slide system that requires relative sliding of the two parts, as shown in Fig. 7 and 8. Initially, the block parts 13 and 14 are brought against each other, establishing the contact between the contact surfaces 13a, 14a, and placing the lateral retaining portions 14g of the second block part 14 next to the lateral edge portions 13g of the first block part 13. Note in Fig. 7 that the first pipe and the second pipe 2, 3 were preliminarily placed in the grooves 13b and 13c of the first block part. Therefore, by sliding the second block part 14 in the axial direction (as indicated by the arrow in Fig. 8) relative to the first block part, the lateral retaining portions 14g of the second block part 14 are brought to straddle the lateral edge portions 13g of the first block part 13, thus obtaining the coupling between the block parts. The relative movement of the two parts stops when the front portion 14d of the second block part 14 comes to rest against the front surface 13d of the first block part 13 and, simultaneously, when the more advanced lateral retaining portions 14g of the second block part 14 come to rest against respective stop portions 13h obtained on the first block part 13. It should be noted that the flared segment of the grooves 14b, 14c of the second block part 14 is positioned axially offset from the flared segment of the grooves 13b, 13c of the first block part 13. This makes assembly possible between the block parts with the pipes 2 and 3 already placed in the grooves 13b, 13c of the first block part 13.

The pipe connecting system further comprises a locking plate 15 made of metal material, which comprises an engaging portion 15a configured to engage simultaneously the flanged portions 2b, 3b of the first pipe and the second pipe 2, 3. A pair of lugs 15b, 15c having transverse dimensions slightly larger than the outer diameter of the first pipe 2 and the second pipe 3, respectively, but smaller than the outer diameter of the flanged portions, 2b and 3b, respectively, is obtained in the locking plate 15. This allows the locking plate 15 to be assembled to the pipes 2 and 3 and moved along those pipes until it is brought to engage with the flanged portions 2b and 3b. In practice, the engaging portion 15a provided by the locking plate 15 is comprised of portions of the surface of that plate facing the connecting block, which are arranged around the edges of the lugs 15b, 15c.

The locking plate 15 is fixed to the connecting block 10 by at least one screw 16 (in the example, two screws) to hold the first pipe and the second pipe 2, 3 between the connecting block 10 and the locking plate 15. For this purpose, through-holes are obtained in the connecting block 10 that allow the positioning of the screws 16, while threaded through-holes 15d are obtained in the locking plate, the threads of which through-holes are engaged by the threads of the screws 16. In this way, the screws 16 act as tie rods that allow the locking plate 15 to be tightened against the flanged portions 2b, 3b of the pipes 2, 3, thus tightening these flanged portions against the connecting block 10. It should be noted that no other screws are required for the integrity of the pipe connecting system than those used for fixing the locking plate 15 to the connecting block 10.

In the example shown, two through-holes 14m, 14n, arranged intermediately between the holes 14e and 14f, are obtained in the second block part 14 to accommodate the screws 16. The first of these through-holes, 14m, spans the entire thickness of the first block part between the first side 11 and the second side 12 of the connecting block. The second of these through-holes, 14n, spans the thickness of only the front portion 14d of the first block part 14, and is aligned with a corresponding through-hole 13n obtained in the first block part.

With reference to Fig. 1, 4 and 5, the ends of the third pipe 4 and the fourth pipe 5 are inserted into the respective enlarged diameter portions 2a" and 3 a" of the first pipe 2 and the second pipe 3, respectively. Between the radially outer surface of each of the third pipe and fourth pipe 4, 5 and the radially inner surface of the respective enlarged diameter portions 2a" and 3a", respective gaskets 17 are interposed. It should be noted that since there is a direct coupling between the first and third pipe, and between the second and fourth pipe, no additional gaskets are required.

The third pipe 4 and the fourth pipe 5 are provided with at least one support portion 4a, 5a (in the example, one support portion each) laterally extending and carrying a through-hole suitable for receiving a relevant screw 4b, 5b for coupling to the connecting body 10. More specifically, threaded inserts 18 are inserted at the front portion 14d of the second block part 14 for fixing by the screws 4b, 5b of the third pipe 4 and the fourth pipe 5 to the connecting block 10. These threaded inserts 18 may be inserted into the second block part 14 during the molding process of the second block part 14, or they may be set into the second block part 14 at a stage following the molding thereof.

It should be noted that on the side of the third pipe 4 and the fourth pipe 5, the connecting block 10 provides a unique surface, namely that provided by the front portion 14d of the second block part 14. This allows precise assembly of the third pipe and the fourth pipe to the connecting block 10, since there are no discontinuities that could cause misalignment between the components.

## Claims

1. A pipe connecting system comprising:
a first pipe (2) and a second pipe (3), each comprising a flared end (2a, 3a);
a connecting block (10) having a first side (11) intended to receive the first pipe (2) and the second pipe (3), and a second side (12) opposite the first side (11) and intended to receive a third pipe (4) and a fourth pipe (5), wherein the connecting block (10) comprises a first block part (13) and a second block part (14) made of plastics material and configured to be fastened to each other around the flared ends (2a, 3a) of the first pipe (2) and second pipe (3);
wherein one of said first block part and second block part comprises a plurality of hook-shaped lateral retaining portions (14g) configured to engage respective lateral edges (13g) of the other of said first block part and second block part in such a way as to fasten the first block part (13) and the second block part (14) to each other;
wherein the first pipe (2) and the second pipe (3) each comprise a flanged portion (2b, 3b) arranged close to the respective flared end (2a, 3a);
wherein the pipe connecting system further comprises a locking plate (15) which comprises an engaging portion (15a) configured to engage simultaneously the flanged portions (2b, 3b) of the first pipe (2) and second pipe (3),
said connecting system being **characterized in that** the locking plate (15) is made of metal material and is fixable to the connecting block (10) by at least one screw (16) to hold the first pipe (2) and the second pipe (3) between the connecting block (10) and the locking plate (15).

2. The connecting system of claim 1, wherein at the second side (12) of the connecting block (10) one of said first block part and second block part comprises a front portion (14d) covering a corresponding front surface (13d) of the other of said first block part and second block part.

3. The connecting system of claim 2, wherein at least one threaded insert (18) is inserted at said front portion for fastening said third pipe and fourth pipe to the connecting block (10) by a respective screw (4b, 5b).

4. The connecting system of any of the preceding claims, further comprising the third pipe (4) and the fourth pipe (5), which are inserted in respective enlarged diameter portions (2a", 3a") of the first pipe (2) and second pipe (3), respectively.

5. The connecting system of claims 3 and 4, wherein the third pipe (4) and the fourth pipe (5) are provided with at least one support portion (4a, 5a) laterally extending and carrying a through-hole adapted to receive a respective screw (4b, 5b) for coupling to said at least one threaded insert (18).

## Patentansprüche

1. Rohrverbindungssystem, enthaltend:
ein erstes Rohr (2) und ein zweites Rohr (3), wobei jedes ein aufgeweitetes Ende (2a, 3a) aufweist;
einen Verbindungsblock (10) mit einer ersten Seite (11), die angedacht ist zum Aufnehmen des ersten Rohrs (2) und des zweiten Rohrs (3), und einer zweiten Seite (12), die gegenüber der ersten Seite (11) ist und angedacht ist zum Aufnehmen eines dritten Rohrs (4) und eines vierten Rohrs (5), wobei der Verbindungsblock (10) einen ersten Blockteil (13) und einen zweiten Blockteil (14) aufweist, die aus Kunststoffmaterial hergestellt sind und ausgebildet sind, dass sie aneinander um die aufgeweiteten Enden (2a, 3a) des ersten Rohrs (2) und des zweiten Rohrs (3) herum befestigt werden;
wobei einer aus dem ersten Blockteil und dem zweiten Blockteil eine Vielzahl von hakenförmigen Querhaltebereichen (14g) aufweist, die ausgebildet sind zum Ergreifen entsprechender Querränder (13g) des anderen aus dem ersten Blockteil und dem zweiten Blockteil auf solch eine Weise, dass der erste Blockteil (13) und der zweite Blockteil (14) aneinander befestigt werden;
wobei das erste Rohr (2) und das zweite Rohr (3) jeweils einen Flanschbereich (2b, 3b) aufweisen, der nahe dem entsprechenden aufgeweiteten Ende (2a, 3a) angeordnet ist;
wobei das Rohrverbindungssystem ferner eine Verriegelungsplatte (15) aufweist, die einen Eingriffsbereich (15a) aufweist, der zum gleichzeitigen Ergreifen der Flanschbereiche (2b, 3b) des ersten Rohrs (2) und des zweiten Rohrs (3) ausgebildet ist,
wobei das Verbindungssystem **dadurch gekennzeichnet ist, dass** die Verriegelungsplatte (15) aus Metallmaterial hergestellt ist und an dem Verbindungsblock (10) durch wenigstens eine Schraube (16) zum Halten des ersten Rohrs (2) und des zweiten Rohrs (3) zwischen dem Verbindungsblock (10) und der Verriegelungsplatte (15) befestigbar ist.

2. Verbindungssystem nach Anspruch 1, wobei an der zweiten Seite (12) des Verbindungsblocks (10) einer aus dem ersten Blockteil und dem zweiten Blockteil einen Vorderbereich (14d) aufweist, der eine entsprechende Vorderfläche (13d) des anderen aus dem ersten Blockteil und dem zweiten Blockteil bedeckt.

3. Verbindungssystem nach Anspruch 2, wobei wenigstens ein mit Gewinde versehener Einsatz (18) an dem Vorderbereich zum Befestigen des dritten Rohrs und vierten Rohrs an dem Verbindungsblock (10) durch eine entsprechende Schraube (4b, 5b) eingeführt ist.

4. Verbindungssystem nach einem der vorhergehenden Ansprüche, ferner enthaltend das dritte Rohr (4) und das vierte Rohr (5), die in entsprechende vergrößerte Durchmesserbereiche (2a", 3a") des ersten Rohrs (2) beziehungsweise des zweiten Rohrs (3) eingeführt sind.

5. Verbindungssystem nach Anspruch 3 und 4, wobei das dritte Rohr (4) und das vierte Rohr (5) mit wenigstens einem Stützbereich (4a, 5a) versehen sind, der sich quer erstreckt und ein Durchgangsloch trägt, das angepasst ist zum Aufnehmen einer entsprechenden Schraube (4b, 5b) zum Koppeln mit dem wenigstens einen mit Gewinde versehenen Einsatz (18).

## Revendications

1. Système de raccordement de tuyaux comprenant :
un premier tuyau (2) et un deuxième tuyau (3), chacun comprenant une extrémité évasée (2a, 3a) ;
un bloc de raccordement (10) comportant un premier côté (11) destiné à recevoir le premier tuyau (2) et le deuxième tuyau (3), et un second côté (12) opposé au premier côté (11) et destiné à recevoir un troisième tuyau (4) et un quatrième tuyau (5), dans lequel le bloc de raccordement (10) comprend une première partie de bloc (13) et une seconde partie de bloc (14) fabriquées en un matériau plastique et configurées pour être fixées l'une à l'autre autour des extrémités évasées (2a, 3a) du premier tuyau (2) et du deuxième tuyau (3) ;
dans lequel l'une desdites première partie de bloc et seconde partie de bloc comprend une pluralité de portions de retenue latérales en forme de crochet (14g) configurées pour venir en prise avec des bords latéraux respectifs (13g) de l'autre desdites première partie de bloc et seconde partie de bloc de manière à fixer la première partie de bloc (13) et la seconde partie de bloc (14) l'une à l'autre ;
dans lequel le premier tuyau (2) et le deuxième tuyau (3) comprennent chacun une portion à bride (2b, 3b) agencée à proximité de l'extrémité évasée (2a, 3a) respective ;
dans lequel le système de raccordement de tuyaux comprend en outre une plaque de verrouillage (15) qui comprend une portion de mise en prise (15a) configurée pour venir en prise simultanément avec les portions à bride (2b, 3b) du premier tuyau (2) et du deuxième tuyau (3),
ledit système de raccordement de tuyaux étant **caractérisé en ce que** la plaque de verrouillage (15) est fabriquée en un matériau métallique et peut être fixée au bloc de raccordement (10) par au moins une vis (16) pour maintenir le premier tuyau (2) et le deuxième tuyau (3) entre le bloc de raccordement (10) et la plaque de verrouillage (15).

2. Système de raccordement selon la revendication 1, dans lequel au niveau du second côté (12) du bloc de raccordement (10), l'une desdites première partie de bloc et seconde partie de bloc comprend une portion avant (14d) recouvrant une surface avant correspondante (13d) de l'autre desdites première partie de bloc et seconde partie de bloc.

3. Système de raccordement selon la revendication 2, dans lequel au moins un insert fileté (18) est inséré au niveau de ladite portion avant pour fixer lesdits troisième tuyau et quatrième tuyau au bloc de raccordement (10) par une vis respective (4b, 5b).

4. Système de raccordement selon l'une quelconque des revendications précédentes, comprenant en outre le troisième tuyau (4) et le quatrième tuyau (5), qui sont insérés dans des portions de diamètre agrandi respectives (2a", 3a") du premier tuyau (2) et du deuxième tuyau (3), respectivement.

5. Système de raccordement selon les revendications 3 et 4, dans lequel le troisième tuyau (4) et le quatrième tuyau (5) sont pourvus d'au moins une portion de support (4a, 5a) s'étendant latéralement et portant un trou traversant adapté pour recevoir une vis respective (4b, 5b) pour l'accouplement audit au moins un insert fileté (18).
